# DEMANDE DE BREVET EUROPEEN

(11) **EP 0 959 101 A1**
(43) Date de publication de la demande: **24.11.1999**
(21) Numéro de dépôt: 99401189.8
(22) Date de dépôt: 17.05.1999
(51) Int. Cl.: C08K 9/04

(54) **Matériau polymère à marquer ou à graver et procédé de marquage ou de gravure d'un tel matériau**

(30) Priorité: 19.05.1998 FR 9806294
(71) Demandeur: MERCK S.A., 94000 Nogent-sur-Marne (FR)
(72) Inventeur: Paire, Emmanuel, 77420 Champs sur Marne (FR); Grandmontagne, Bernard, 29880 Plouguerneau (FR); Brousse, Bernard, 64200 Biarritz (FR)
(74) Mandataire: Ahner, Francis

(57) **Abrégé**

La présente invention concerne un matériau polymère à marquer ou à graver chargé d'un ou plusieurs pigments minéraux, les pigments minéraux étant des microparticules de pigments minéraux enrobées d'une couche de chitine ou dérivés de chitine.

Elle concerne également un procédé de marquage ou de gravure d'un tel matériau polymère consistant à irradier par un laser ledit matériau.

Les matériaux selon l'invention permettent d'améliorer le contraste du marquage dans la matière.

Ces matériaux sont utiles pour le marquage indélébile des informations sous forme notamment de codes à barres.

## Description

La présente invention concerne un nouveau matériau polymère à marquer ou à graver chargé d'un ou plusieurs pigments minéraux.

Elle concerne également un procédé de marquage ou de gravure d'un tel matériau polymère par irradiation laser et le matériau marqué ou gravé obtenu par ledit procédé.

Par marquage, on entend le fait d'identifier superficiellement un objet sans autre spécification. La gravure est une forme particulière de marquage en creux.

Il existe de très nombreux procédés de marquage qui diffèrent selon le matériau travaillé. Leur exploitation est souvent limitée à une application particulière. En ce qui concerne les matières plastiques, on peut citer les procédés par sérigraphie, par tampographie, par jet d'encre, par transfert à chaud ou par moulage. Le laser est une forme particulière de marquage piloté par une gestion informatique.

Le développement de la gravure par laser est stimulé par l'évolution rapide des contraintes notamment en ce qui concerne l'environnement et les exigences commerciales. Il présente, en outre, plusieurs avantages :
- Propreté: Marquage sans encre, sans solvant, ne nécessitant pas d'installation de préparation de surface des pièces à marquer. Système non polluant.
- Recyclabilité : Absence de dépôt sur l'objet à marquer. Additif sans métaux lourd n'altérant pas le retraitement des polymères.
- Inaltérabilité : Inscription en profondeur, dans la pièce. Conforme aux normes européennes sur l'information des consommateurs et permet une bonne traçabilité ISO. Depuis le 1^{er} janvier 1997 il est fait obligation pour tous les emballages pharmaceutiques et cosmétiques d'inscrire de façon indélébile la date de péremption ainsi que le numéro du lot.
- Souplesse: Gestion informatisée du marquage permettant la réalisation de texte, code à barres, logo et dessins. Possibilité de personnaliser chaque pièce. Aucune altération liée aux contraintes de production.
- Economique : Absence de consommable, pièces parfaites dès le premier marquage, pas de préparation de surface.

La machine laser par son adaptation et sa flexibilité répond totalement à toutes ces évolutions. Elle peut être intégrée sur une ligne de production ou elle pourra effectuer des opérations répétitives à cadence élevée. Elle peut tout aussi bien effectuer des opérations individuelles, au coup par coup, grâce à sa grande convivialité.

Le marquage ou la gravure de matériaux polymères par irradiation laser est bien connue. Selon la réactivité des matériaux polymères à l'irradiation, on peut classer lesdits polymères en trois familles :

Les matériaux polymères naturellement réactifs tels que l'ABS, le polycarbonate, le polystyrène choc, le polysulfone. Dans ce cas, le laser carbonise le polymère et n'autorise alors que des marquages sombres. La présence de fibres de verre, d'agents ignifugeant perturbent le gravage jusqu'à le rendre impossible.

Les matériaux partiellement réactifs tels que le polystyrène cristal, les polyétherimides. Le laser carbonise partiellement le polymère, on obtient un marquage de très mauvaise définition car éclaté.

Les polymères non réactifs tels que le polypropylène, le polyéthylène haute densité (PEHD), le polyéthylène butadiène (PEBD), le polyamide, le POM, le polyéther, les polyuréthannes. Dans ce cas le laser traverse le polymère.

Afin de rendre ces polymères opaques ou réactifs au rayon laser, il est connu de les additiver avec différents pigments ou charges que l'on peut classer également par réactivité.

Les pigments très faiblement réactifs tels que l'oxyde de zinc (ZnO), le nanotitane.

Les pigments réactifs tels que l'oxyde de titane (TiO₂), l'oxyde d'antimoine Sb₂O₃.

Les pigments très réactifs tels que les micas titane. Les micas titane sont des micas enrobés d'une fine couche d'oxyde de titane.

La qualité du marquage est variable en fonction de l'additif choisi et de sa concentration. De façon surprenante, on a trouvé que les pigments enrobés d'une couche de chitine amélioraient considérablement le contraste du marquage, notamment de la gravure, dans la matière. Le rayon énergétique décompose brutalement le revêtement de chitine (effet thermique). Cette réactivité permet de travailler (à contraste comparable) avec des machines moins puissantes, plus économes en énergie (donc moins chère) ou avec des concentrations pigmentaires plus faibles donc plus simple à travailler et plus économiques.

Dans le cas des métaux lourds tels que ceux régis par les textes légaux (comme l'antimoine), le fait de pouvoir travailler à des concentrations plus faibles (au moins deux fois moins) constitue un avantage remarquable.

Dans la présente description, on distinguera le « matériau polymère » du « matériau polymère chargé ».

En premier lieu, l'invention concerne un matériau polymère à marquer ou à graver chargé d'un ou plusieurs pigments minéraux, caractérisé en ce que les pigments minéraux sont des microparticules de pigments minéraux enrobées d'une couche de chitine ou dérivés de chitine.

Les pigments minéraux enrobés d'une couche de chitine ou dérivés de chitine sont décrits dans la demande de brevet français n° 96 14216 déposée le 21 novembre 1996, non publiée.

Un procédé de préparation de microparticules de pigments minéraux enrobées d'une couche de chitine ou dérivés de chitine comprend les étapes suivantes :
a) des microparticules de pigments minéraux en suspension sont mises en contact avec une solution de chitosane salifié ou de dérivés de chitosane salifiés de façon à provoquer le dépôt du chitosane salifié ou des dérivés de chitosane salifiés autour des microparticules de pigments,
b) les microparticules de pigments enrobées de chitosane ou dérivés de chitosane salifiés sont ensuite soumises à une réaction d'acétylation au moyen d'anhydride d'acide organique.

Le chitosane est un polymère de D-glucosamine à enchaînement β,1-4.

Parmi les dérivés de chitosane convenant, on cite notamment les dérivés O-éthérifié ou O-estérifié du type correspondant à la formule I ci-dessous:

[C₆H₈O₃.(NH₂)ₓ.(NHCOCH₃)_{y.}(OR)_{a.}(OH)_{b}]ₙ

dans laquelle :
R représente au moins un groupe choisi parmi le groupe carboxyalkyle de 2 à 4 atomes de carbone, un groupe hydroxyéthyle, un groupe hydroxypropyle, un groupe dihydroxypropyle ou un groupe alkyle de 1 à 3 atomes de carbone,
x est un nombre compris entre 0,1 et 1,
y est égal à 1,0 - x,
a est un nombre compris entre 0,1 et 1,
b est égal à 1,0 - a
n est le nombre de monomères
où une forme salifiée de ces composés.

La chitine ou poly N-acétyl-D-glucosamine est un polysaccharide dont les unités sont liées entre elles par des ponts β-1,4 glycosidiques.

Elle se distingue donc du chitosane qui est une chitine N-désacétylée. Lorsque la désacétylation est totale, on obtient un chitosane singulier, le polyglucosamine.

La chitine est naturellement désacétylée au-dessus de 5% et plus. Le terme de chitosane est réservé aux dérivés qui, ayant subi une désacétylation, deviennent solubles en milieu aqueux acide. Il faut pour ce faire un degré de désacétylation au moins supérieur à 65%. Ce taux influera sur les propriétés physiques du chitosane, solubilité et viscosité, mais également sur son comportement biochimique.

La concentration de chitosane salifié ou de dérivés de chitosane salifiés dans la solution est telle qu'elle est inférieure à la concentration micellaire critique.

La valeur de cette concentration, nécessairement faible, dépend de l'agitation appliquée des particules utilisées, de leur interaction avec le chitosane ou dérivés de chitosane, et de la concentration des particules elles-mêmes.

En tout état de cause, la concentration de particules dans la suspension ainsi que la concentration de chitosane salifié ou dérivés de chitosane salifiés dans la solution doit être telle qu'il se produit un dépôt de chitosane ou dérivés de chitosane par adsorption à la surface des particules à la différence de la formation d'un gel qui conduit à des particules non individualisées.

La granulométrie des particules de pigments minéraux est micrométrique généralement comprise entre 1 et 200 µm, généralement 1 à 100 µm, de préférence supérieure à 5 µm, avantageusement 5 à 60 µm bien que ces bornes ne soient pas limitatives. La concentration des pigments en suspension est généralement comprise entre 0,4 et 40 g/l.

Parmi les pigments minéraux on citera de préférence, le mica, le mica enrobé d'oxydes métalliques notamment les pigments nacrés du type Iriodine®, Florapearl® 10 et 12 et les pigments de la gamme Iriodione®.

Parmi les formes salifiées de chitosane ou dérivés de chitosane, on cite notamment les sels d'acide organique tels que l'acide acétique ou l'acide oxalique et les sels d'acides minéraux tels que l'acide chlorhydrique. De préférence, on cite l'acétate de chitosane ou les acétates de dérivés de chitosane.

Selon des variantes préférées, les microparticules de pigments minéraux sont mises en suspension dans une solution hydroalcoolique. La suspension est maintenue par agitation. Le mélange eau:alcool peut varier dans de larges proportions telles que le rapport eau:alcool soit compris entre 0,25 et 4 ou encore 20/80 et 80/20.

L'alcool peut être un mono ou polyalcool saturé ou insaturé bien qu'il soit souhaitable que l'alcool choisi soit parmi les moins réactifs vis-à-vis de l'anhydride organique afin d'éviter toute réaction parasite.

Il devra également de préférence être volatil pour faciliter son élimination subséquente.

De préférence, on choisit les alcools secondaires du type isopropanol ou isobutanol.

De préférence, on réalise en premier lieu la suspension sous agitation de particules pigmentaires dans la phase hydroalcoolique en laissant la suspension en l'état un temps suffisant pour permettre le débullage puis on y rajoute la solution de chitosane ou dérivés de chitosane salifiés.

Le pH de la solution de chitosane salifié ou dérivé de chitosane salifié est généralement compris entre 2 et 6 selon la forme salifiée choisie. Dans le cas de l'acétate de chitosane ou acétate de dérivés de chitosane, le pH est généralement entre 4 et 4,5.

De préférence, la concentration de chitosane ou dérivés de chitosane salifiés est comprise entre 0,005 et 0,5 g/l, avantageusement entre 0,01 et 0,1 g/l.

La solution est laissée sous agitation un temps suffisant à l'adsorption ou à l'encrage initial des chaînes de chitosane ou dérivés de chitosane à la surface des pigments et dans le cas de pigments enrobés de mica titane oxyde à la fixation de chitosane au titane soit par chélation, soit par complexation.

La réaction d'acétylation est effectuée par ajout d'une solution d'un anhydride d'acide organique dans un alcool.

Comme précédemment, l'alcool sera de préférence un alcool secondaire tel que l'isopropanol ou l'isobutanol.

Parmi les anhydrides d'acide organique on choisit de préférence l'anhydride acétique.

La concentration d'anhydride d'acide organique notamment d'anhydride acétique est comprise entre 0,1 et 10 g/l, de préférence entre 0,5 et 5 g/l.

Selon une variante préférée, on donne ci-après la quantité des différents réactifs mis en jeu, étant entendu que cette variante n'est donnée qu'à titre indicatif et ne saurait en aucune manière limiter le procédé selon l'invention.

| | de | à | de préférence |
|---|---|---|---|
| Eau | 20 | 80 | 50 g |
| Alcool (isopropanol) | 80 | 20 | 50 g |
| Acétate de chitosane | 0,005 | 0,5 | 0,04 g |
| Pigments | 0,4 | 40 | 4 g |
| Anhydride acétique | 0,1 | 10 | 1 g |

De préférence, les pigments minéraux enrobés sont présents dans le matériau dans une proportion en poids par rapport au matériau chargé compris entre 0,3 et 1,5 %, avantageusement entre 0,5 et 1 %.

L'invention trouve une application particulièrement avantageuse dans le marquage ou la gravure de matériaux polymères dont les polymères sont choisis dans le groupe constitué par les polyétherimides, les polyoléfines, les polystyrènes ou dérivés de polystyrène, les polyamides, les polycarbonates, les polyuréthannes.

Ce marquage très efficace sur les matières plastiques peut être notamment utilisé pour son caractère inaltérable pour marquer des oreillettes pour le bétail, pour les numéros d'identification de pièces automobiles, pour des emballages cosmétiques, de l'outillage, pour l'emballage alimentaire.

L'invention concerne également un procédé de marquage ou de gravure d'un matériau polymère tel que défini précédemment, caractérisé en ce que ledit matériau est soumis à une irradiation par laser.

L'invention concerne également le matériau marqué ou gravé obtenu.

Parmi les lasers, on cite notamment les lasers YAG, CO₂, et les lasers Excimer. Selon les cas, on obtient des marquages clairs ou des marquages sombres.

Les pigments du type mica ou mica titane destinés au marquage laser (tels que ceux commercialisés sous la marque L.S.®) sont particulièrement appropriés dans le cadre de la présente invention. Les micas titane sont principalement composés de micas enrobés d'une fine couche d'oxyde métallique à haut indice de réfraction (n > 2.5). Quand un rayon laser frappe la surface du pigment, les lois de l'optique impliquent une réflexion de certaines longueurs d'ondes, une partie est transmise dans le pigment et la matrice. Le mica absorbe la plus grande partie de cette énergie qu'il restitue presque instantanément. Cette restitution s'accompagne d'un fort dégagement thermique et entraîne la création d'un plasma. En fonction de l'environnement coloristique du pigment, de l'intensité énergétique, du choix du pigment on obtiendra un marquage sombre (carbonisation ) ou un marquage clair (bulles).

L'enrobage d'un pigment avec un polymère de chitine améliore considérablement le contraste du marquage dans la matière. Le rayon énergétique décompose brutalement le revêtement de chitine.

L'invention est maintenant illustrée par les exemples suivants :

### Exemple 1

### Enrobage de pigments nacrés Iriodine® 221

- Préparation initiale
   Dans un réacteur de 30 litres, on verse successivement :
   - 1 kg de pigments Iriodine® 221 de granulométrie comprise entre 5 et 25 µm
   - 8 litres d'isopropanol
   - 12 litres d'eau

   Le mélange est agité durant deux heures afin de débuller les solutions.
- Phase de fixation du chitosane
   Sur la solution précédente en agitation, on verse :
   une solution préalablement filtrée de 5 litres d'eau contenant 30 g de chitosane (0,6 %, 0,18 moles) et 15 g d'acide acétique.

   Le mélange est agité durant deux heures pour une adsorption maximale du chitosane sur les pigments.
- Phase de réacétylation
   Sur la solution précédente en agitation, on verse :
   500 ml d'une solution fraîchement préparée mais homogène, de propylène glycol (monopropylène glycol) contenant 100 g (une mole) d'anhydride acétique.

   Dans ces conditions, l'acétylation est effectuée pour des températures comprises entre 15 et 25°C, les pigments enrobés déphasent avec perte de flux dans les 5 à 45 min qui suivent le rajout de la solution de réacétylation. L'agitation est maintenue durant 2 heures, puis, après décantation et égouttage par toute méthode appropriée, les pigments sont séchés et conditionnés.

### Exemple 2

### Enrobage de pigments nacrés Iriodine® 111 (granulométrie 1 à 15 µm)

Les conditions opératoires de l'exemple 1 sont reproduites et conduisent aux pigments correspondants.

### Exemple 3

Le laser utilisé est un laser Nd :Yag. Les tirs ont été réalisés sur les matériels de la société Allflex, Merck KGaA et Cheval Frère,
Fréquence de tir : 5000 Hz à 10 000 Hz
Ampérage : 10 à 20 ampères.

On fabrique par injection des plaquettes de polyuréthanne comprenant 1,2 % de jaune OH 832 et 0,5 % ; 0,75 % ; 1 % de pigments de mica titane enrobés selon les exemples 1 et 2.

De façon surprenante, on observe que les pigments enrobés de chitine améliorent de façon notable la réactivité d'un support au marquage laser.

### Exemple 4

Des essais avec les mêmes proportions que celles de l'exemple 3 avec un pigment de mica pur enrobé selon la méthode de l'exemple 1 conduisent à une amélioration importante du contraste du marquage.

De ces deux essais, on conclut que l'enrobage de chitine améliore de façon notable la réactivité d'un support au marquage laser.

### Exemple 5

Un essai similaire à l'exemple 3 a été réalisé avec 0,5 % de Sb₂O₃ pelliculé avec la chitine selon la méthode décrite à l'exemple 1 (4 % en poids de Sb₂O₃).

La réactivité laser est comparable au témoin (exemple 6 comparatif).

### Exemple 6 (comparatif)

Un essai similaire à l'exemple 5 a été réalisé avec 2,6 % de Sb₂O₃.

Le contraste est similaire à celui obtenu à l'exemple 5 ce qui montre l'amélioration de la réactivité due à l'enrobage de chitine.

L'invention n'est pas limitée aux mises en oeuvre décrites précédemment mais s'étend aux matériaux chargés en microparticules de pigments enrobées par des polymères équivalents, notamment des polysaccharides équivalents qui conduisent aux améliorations de contraste précitées.

## Revendications

1. Matériau polymère à marquer ou à graver chargé d'un ou plusieurs pigments minéraux, caractérisé en ce que les pigments minéraux sont des microparticules de pigments minéraux enrobées d'une couche de chitine ou dérivés de chitine.

2. Matériau polymère à marquer ou à graver selon la revendication 1, caractérisé en ce que lesdites microparticules de pigments minéraux non enrobées présentent une granulométrie moyenne comprise entre 1 et 200 µm, de préférence supérieure à 5 µm.

3. Matériau polymère à marquer ou à graver selon la revendication 1, caractérisé en ce que lesdites microparticules de pigments minéraux non enrobées sont choisies dans le groupe constitué par les oxydes métalliques les micas et les micas enrobés d'oxydes métalliques, notamment le mica titane.

4. Matériau polymère à marquer ou à graver selon l'une des revendications précédentes, caractérisé en ce que les pigments minéraux enrobés sont présents dans une proportion en poids par rapport au matériau chargé compris entre 0,3 et 1,5 %, avantageusement 0,5 à 1 %.

5. Matériau polymère à marquer ou à graver selon l'une des revendications précédentes, caractérisé en ce que les polymères sont choisis dans le groupe constitué par les polyétherimides, les polyoléfines, les polystyrènes ou dérivés de polystyrène, les polyamides, les polycarbonates, les polyuréthannes.

6. Matériau polymère à marquer ou à graver selon l'une des revendications 1 à 5, caractérisé en ce que ledit matériau est soumis à une irradiation par laser.

7. Procédé de marquage ou de gravure d'un matériau polymère selon l'une des revendications 1 à 6, caractérisé en ce que l'irradiation est effectuée par un laser YAG, CO₂ ou un laser excimer.

8. Matériau marqué ou gravé obtenu par le procédé selon la revendication 7.
